(19) Europäisches Patentamt
European Patent Office
Office européen des brevets

(11) **EP 4 684 691 A1**

(12) **EUROPEAN PATENT APPLICATION**
published in accordance with Art. 153(4) EPC

(43) Date of publication:
**28.01.2026   Bulletin 2026/05**

(21) Application number: **24774044.2**

(22) Date of filing: **15.03.2024**

(51) International Patent Classification (IPC):
***A47B 9/12*** (2006.01)

(52) Cooperative Patent Classification (CPC):
Y02T 10/70

(86) International application number:
**PCT/CN2024/082008**

(87) International publication number:
**WO 2024/193479 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **21.03.2023   CN 202310276834**

(71) Applicant: **Qiao, Bin**
**Nanjing, Jiangsu 210000 (CN)**

(72) Inventor: **Qiao, Bin**
**Nanjing, Jiangsu 210000 (CN)**

(74) Representative: **dompatent**
**Partnerschaft von
Patentanwälten und Rechtsanwälten mbB
Deichmannhaus am Dom
Bahnhofsvorplatz 1
50667 Köln (DE)**

(54) **SINGLE-POWER-SOURCE LIFTING AND FOLDING MECHANISM AND FURNITURE**

(57)     A single-power-source lifting and folding mechanism and furniture. The lifting and folding mechanism comprises a first lifting mechanism (1), a second lifting mechanism (2), a first flexible rope (3) and a driving device (4). The first lifting mechanism (1) comprises a first movable component (5) and a first fixed component, and the upper portion and lower portion of the first movable component (5) are respectively provided with a first movable pulley (7) and a second movable pulley (8) in a rotational manner; the second lifting mechanism (2) comprises a second movable component (9) and a second fixed component, and the upper portion of the second movable component (9) is provided with a third movable pulley (11) in a rotational manner; one end of the first flexible rope (3) is fixedly connected to the first fixed component, and the other end of the first flexible rope (3) sequentially passes through the second movable pulley (8), the first movable pulley (7) and the third movable pulley (11), and is then fixedly connected to the second fixed component; and the driving device (4) is mounted on the second fixed component, and is connected to the second movable component (9) or a first cross beam (12) or a table top (13). By means of the cooperation between the flexible rope and the movable pulley, pulling-force transmission and pulling limiting functions are realized in a lifting process, such that only one driving device is needed to realize synchronous lifting of all lifting mechanisms.

Fig.9

## Description

## Technical Field

The present invention relates to a single power source lifting and folding mechanism and furniture.

## Background Art

As a daily necessity, a table is composed of a tabletop and table legs which are fixedly connected. The height of the table legs is fixed, so that the height of the entire tabletop is fixed and non-adjustable. However, with different application environments and application needs of different groups of people, the requirements for the height diversity, automation degree and comfort level of the table are increasingly higher.

In order to adjust the height of the table as needed, Chinese Utility Model Patent with Authorization Announcement No. CN204071049U discloses a lifting table, which includes a tabletop, a baffle, upper hydraulic columns, lower hydraulic columns and a driving device. The baffle is mounted on one side of the top surface of the tabletop; the upper hydraulic columns, lower hydraulic columns and the driving device are combined into a support column; and four support columns are respectively mounted at the four corners of the tabletop. In use, the driving device is started to lift the tabletop to a proper position. Since the lifting table is provided with four support columns, it is necessary to control the four support columns to lift and lower synchronously. If the four support columns are not synchronous, the tabletop will tilt or fail to maintain a specific tilt angle. For example, when the tabletop is lifted, if one of the support columns extends slowly, the part of the tabletop connected to this support column will rise slowly; during the adjustment of the tabletop height, the tabletop at this support column will tilt downward, and objects placed on the tabletop may slide off due to the tilt of the tabletop. In addition, when the four support columns need to be controlled to lift and lower independently, it is difficult to control their lifting synchronization. However, in the prior art, in order to realize the lifting of all parts of the tabletop, it is necessary to arrange multiple liftable support columns.

The lifting table disclosed in Chinese Utility Model Patent with Authorization Announcement No. CN213992819U is provided with at least two table legs, which are electric, pneumatic or hydraulic lifting columns. Optimally, the lifting columns of model OKIN-DD06.301 are adopted. If the table legs cannot lift and lower synchronously, the tabletop will also tilt or fail to maintain a specific tilt angle.

## Summary of the Invention

The objective of the present invention is to provide a single power source lifting and folding mechanism, so as to solve the technical defect in the prior art that the synchronous lifting mechanism on furniture adopts two driving structures, resulting in poor lifting synchronization on both sides of the components of the lifting and folding mechanism and thus tilting of the furniture tabletop.

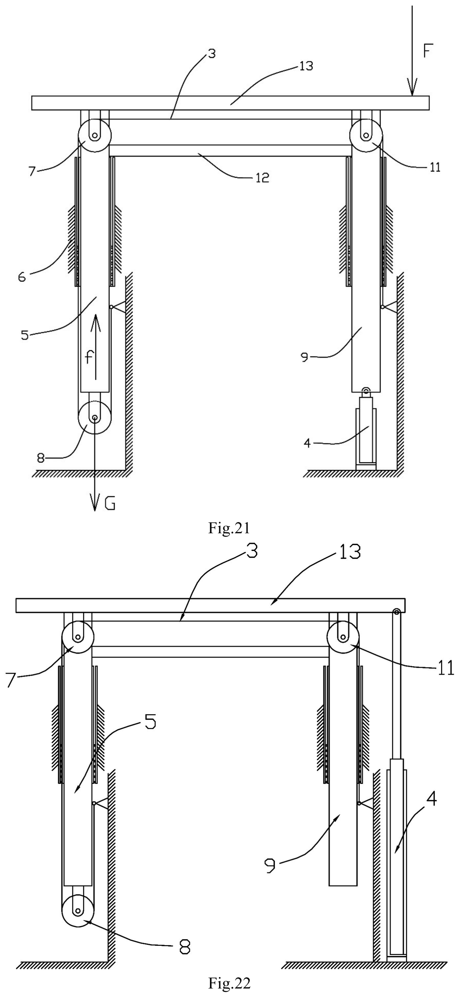

To solve the above problem, the technical solution adopted by the present invention is: A single power source lifting and folding mechanism comprises a first lifting mechanism, a second lifting mechanism, a first flexible cable and a driving device. The first lifting mechanism includes a first movable component and a first fixed component; the first movable component is mounted on the first fixed component and forms a prismatic pair with the first fixed component; the upper part and lower part of the first movable component are respectively equipped with a first movable pulley and a second movable pulley. The second lifting mechanism includes a second movable component and a second fixed component; the second movable component is slidably mounted on the second fixed component; the upper part of the second movable component is equipped with a third movable pulley. One end of the first flexible cable is fixedly connected to the first fixed component, and the other end of the first flexible cable is fixedly connected to the second fixed component after bypassing the second movable pulley, the first movable pulley and the third movable pulley. The driving device is mounted on the second fixed component, and the driving device directly or indirectly abuts against the rotating shaft of the third movable pulley and tensions the first flexible cable. The present invention is only provided with one driving device. When the driving device drives the second movable component, or the first crossbeam connecting the first movable component and the second movable component, or the side of the tabletop supported by the present invention (which is connected to the first movable component) to rise, the third movable pulley rises along with the second movable component and pulls the first movable component to rise synchronously, thereby driving the other side of the tabletop or the crossbeam to rise synchronously. Therefore, through the arrangement of the movable pulleys and the first flexible cable, the present invention transmits pulling force via the first flexible cable, and only one driving device is needed to realize the synchronous rise of the first lifting mechanism and the second lifting mechanism. When lowering is required, as shown in Figure 21, under the action of a sufficiently large external force F applied to the side close to the second movable component (9), the second movable component (9) will descend and drive the same side of the tabletop (13) to descend at the same time. At this time, the first flexible cable does not transmit thrust, and the first movable component (5) will overcome the frictional resistance f between the first movable component (5) and the first fixed component body (6) by virtue of the resultant force G of its own gravity and the partial gravity of the tabletop (13) and the crossbeam (12) on the side close to it, so as to realize the descent of the first movable component (5). Moreover, since the driving device (4) directly or indirectly abuts against the rotating shaft of the third movable pulley (11) and always tensions the first flexible cable (3) to play a pulling and limiting role, the second movable component (9) and the first movable component (5) can descend synchronously. When the present invention is applied to furniture to adjust the height of the furniture, it can ensure that the furniture tabletop will not tilt; or if the furniture tabletop itself has a specific tilt angle, the specific tilt angle can still be maintained when the height is adjusted. The present invention is only provided with one driving device, featuring simple structure, reliable operation and low cost.

As a further improvement of the present invention, the mechanism further comprises a third lifting mechanism and a second flexible cable. The third lifting mechanism includes a third movable component and a third fixed component; the third movable component is arranged on the third fixed component and can slide on the third movable component; the upper part and lower part of the third movable component are respectively provided with a fourth movable pulley and a fifth movable pulley; a sixth movable pulley is mounted on the upper part of the first movable component or the second movable component; one end of the second flexible cable is fixedly connected to the third fixed component, and the other end of the second flexible cable is fixedly connected to the first fixed component or the second fixed component after bypassing the fifth movable pulley, the fourth movable pulley and the sixth movable pulley; and the second flexible cable is in a tensioned state. By arranging the third lifting mechanism and the second flexible cable, the present invention transmits pulling force and plays a pulling and limiting role via the second flexible cable, so that the first lifting mechanism, the second lifting mechanism and the third lifting mechanism can lift and lower synchronously. When supporting a relatively large tabletop, the present invention provides more supporting points for the tabletop, and improves the stability of the tabletop in use while maintaining the synchronous lifting of all parts of the tabletop.

As a further improvement of the present invention, a pulley mounting seat is mounted on the upper part of the first movable component; the pulley mounting seat moves synchronously with the movement of the first movable component; and both the first movable pulley and the fourth movable pulley are mounted on the pulley mounting seat. By arranging the pulley mounting seat, the present invention facilitates the installation of the first movable pulley and the fourth movable pulley, and can effectively ensure that there is no mutual interference between the first movable pulley and the fourth movable pulley.

As a further improvement of the present invention, the mechanism further comprises more than one fourth lifting mechanism and a number of third flexible cables equal to that of the fourth lifting mechanisms. The fourth lifting mechanism includes a fourth movable component and a fourth fixed component; the fourth movable component is slidably arranged on the fourth fixed component; the upper part and lower part of the fourth movable component are respectively provided with a seventh movable pulley and an eighth movable pulley; a ninth movable pulley is mounted on the upper part of the first movable component, the second movable component or the third movable component; one end of the third flexible cable is fixedly connected to the fourth fixed component, and the other end of the third flexible cable is fixedly connected to the first fixed component, the second fixed component or the third movable component after bypassing the eighth movable pulley, the seventh movable pulley and the ninth movable pulley; and the third flexible cable is in a tensioned state, so that the fourth movable component is lifted and lowered synchronously with the first movable component, the second movable component and the third movable component. By arranging one or more fourth lifting mechanisms, the present invention transmits pulling force and plays a pulling and limiting role via each third flexible cable, so that the fourth movable component of each fourth lifting mechanism can lift and lower synchronously with the first movable component, the second movable component and the third movable component without increasing the number of driving devices. When in use, the present invention supports the tabletop, provides more support for the tabletop, and further improves the stability of the tabletop.

As a further improvement of the present invention, both the first movable component and the first fixed component are tubular; the first fixed component is sleeved on the first movable component; and a sliding guide assembly is arranged on the first movable component to guide the sliding of the first movable component inside the first fixed component. The present invention adopts tubular movable components and fixed components, which facilitates the sliding installation of the two. By arranging the sliding guide assembly, the sliding of the movable component relative to the fixed component is smoother.

As a further improvement of the present invention, the first fixed component comprises a first fixed component body and a first fixed rod; the first movable component is slidably mounted with the first fixed component body; the first fixed rod extends into the first movable component, and the top end of the first fixed rod is higher than the second movable pulley; and the end of the first flexible cable is fixedly connected to the upper part of the first fixed rod. The present invention is provided with the first fixed rod, which extends into the first movable component. In this way, the first flexible cable can be fixedly connected to the first fixed component from inside the first movable component, without the need to open a slot on the first movable component for the first flexible cable to pass through the first movable component and then be fixedly connected to the first fixed component, thus facilitating the assembly of the present invention.

As a further improvement of the present invention, the first fixed rod is made of metal profile, bar or pipe. The present invention adopts metal profiles such as channel steel, angle steel and square steel, or metal bars such as metal rods, so as to ensure the strength of the first fixed rod, avoid deformation such as bending in use, and reduce the lifting synchronization of various parts of the present invention.

As a further improvement of the present invention, the first lifting mechanism and the second lifting mechanism are parallel and form an included angle with the vertical direction. In use, the present invention can be properly arranged according to the space where it is located, so that the tabletop supported by the present invention meets the space requirements.

As a further improvement of the present invention, the driving device adopts a gas spring; the pressure cylinder of the gas spring is mounted on the second fixed component; the piston rod of the gas spring is connected to the second movable component, the first crossbeam or the tabletop; or the piston rod of the gas spring is connected to the second fixed component, and the pressure cylinder of the gas spring is connected to the second movable component, the first crossbeam or the tabletop; the expansion and contraction of the piston rod of the gas spring is used to drive the second movable component, the first crossbeam or the tabletop to lift and lower. The present invention adopts the gas spring to drive the overall lifting and lowering, which not only facilitates the control of lifting and lowering, but also facilitates the installation of the driving device and reduces the space occupied by the driving device.

Another objective of the present invention is to provide a piece of furniture, so as to solve the technical defect in the prior art that the furniture tabletop tilts due to poor lifting synchronization of various supporting parts when the furniture tabletop is lifted and lowered.

To solve the above problem, the technical solution adopted by the present invention is: A piece of furniture comprises the single power source lifting and folding mechanism; the tabletop of the furniture is fixedly connected to the top of the single power source lifting and folding mechanism; and the lifting of the single power source lifting and folding mechanism is used to adjust the height of the furniture tabletop. Due to the good lifting synchronization of the lifting and folding mechanism, all parts of the tabletop can lift and lower synchronously during use. In any state, the tabletop is in a synchronous lifting state, and will not tilt; or if the tabletop is in an initial tilted state, the same tilt angle can still be maintained during lifting and lowering.

As a further improvement of the present invention, more than one fixed pulley is mounted at the bottom of the tabletop; the first flexible cable and/or the second flexible cable and/or the third flexible cable bypasses the fixed pulley, so that the first flexible cable and/or the second flexible cable and/or the third flexible cable are all located below the tabletop. The present invention ensures that the furniture tabletop can lift and lower synchronously without tilting, and can properly arrange fixed pulleys according to the shape of the furniture tabletop to limit the positions of the first flexible cable and/or the second flexible cable and/or the third flexible cable, so that the first flexible cable and/or the second flexible cable and/or the third flexible cable will not be partially located outside the lower side of the tabletop.

In conclusion, the beneficial effects of the present invention are: Through the cooperation of the flexible cables and the movable pulleys, the present invention transmits pulling force and plays a pulling and limiting role during the lifting process. Therefore, the present invention only needs one driving device to realize the synchronous lifting of all lifting mechanisms, and avoids the problem that the tabletop supported by the lifting device tilts due to the difficulty in controlling the synchronous operation of multiple driving devices when multiple driving devices are arranged.

**Brief Description of the Drawings**

Figure 1 is a schematic diagram for analyzing the displacement of the second movable pulley and the movement displacement of the first flexible cable in the present invention.

Figure 2 is a schematic diagram for analyzing the displacement of the first movable pulley and the movement displacement of the first flexible cable in the present invention.

Figure 3 is a schematic diagram for analyzing the displacement of the movable pulley group composed of the first movable pulley and the second movable pulley and the movement displacement of the first flexible cable in the present invention.

Figure 4 is a schematic diagram for analyzing the displacement of the third movable pulley and the movement displacement of the first flexible cable in the present invention.

Figure 5 is a first schematic diagram of the connection between the movable pulleys and the first flexible cable in the present invention.

Figure 6 is a schematic diagram for analyzing the movement displacements of the first movable pulley, the second movable pulley and the third movable pulley in the present invention.

Figure 7 is a second schematic diagram of the connection between the movable pulleys and the first flexible cable in the present invention.

Figure 8 is a three-dimensional structural diagram of Embodiment 1.

Figure 9 is a longitudinal cross-sectional view of Embodiment 1.

Figure 10 is a three-dimensional structural diagram of the movable pulleys and the first flexible cable in Embodiment 1.

Figure 11 is a winding diagram of the first flexible cable with the first movable pulley and the second movable pulley in Embodiment 1.

Figure 12 is a schematic diagram of the movable component sleeved outside the fixed component in Embodiment 1.

Figure 13 is a three-dimensional cross-sectional view of the movable component sleeved outside the fixed component in Embodiment 1.

Figure 14 is a three-dimensional structural diagram of Embodiment 2.

Figure 15 is a winding diagram of the movable pulleys and the flexible cables in Embodiment 2.

Figure 16 is a structural diagram of the pulley mounting seat, the first movable pulley and the sixth movable pulley in Embodiment 2.

Figure 17 is a three-dimensional structural diagram of Embodiment 4.

Figure 18 is a three-dimensional structural diagram of Embodiment 4 after rising.

Figure 19 is a schematic diagram of the driving device mounted on the side close to the first lifting mechanism.

Figure 20 is a schematic diagram of the driving device mounted on the side close to the first lifting mechanism tilting under force.

Figure 21 is a schematic diagram of the driving device connected to the second movable component and abutting against the rotating shaft of the third movable pulley.

Figure 22 is a schematic diagram of the driving device connected to the tabletop and abutting against the rotating shaft of the third movable pulley.

Figure 23 is a three-dimensional structural diagram of Embodiment 3.

Figure 24 is a winding diagram of the movable pulleys and the flexible cables in Embodiment 3.

Figure 25 is a winding diagram of the fixed pulley and the flexible cable in Embodiment 6.

Wherein: 1. First lifting mechanism; 2. Second lifting mechanism; 3. First flexible cable; 4. Driving device; 5. First movable component; 5-1. Inner movable component body; 5-2. Outer movable component body; 6. First fixed component body; 7. First movable pulley; 8. Second movable pulley; 9. Second movable component; 10. Second fixed component body; 11. Third movable pulley; 12. First crossbeam; 13. Tabletop; 14. Third lifting mechanism; 15. Second flexible cable; 16. Third movable component; 17. Third fixed component body; 18. Fourth movable pulley; 19. Fifth movable pulley; 20. Sixth movable pulley; 21. Second crossbeam; 22. Pulley mounting seat; 23. Sliding guide assembly; 24. First fixed rod; 25. Pressure cylinder; 26. Piston rod; 27. First support plate; 28. Second support plate; 29. Third fixed rod; 30. Fourth lifting mechanism; 31. Third flexible cable; 32. Fourth movable component; 33. Fourth fixed component body; 34. Seventh movable pulley; 35. Eighth movable pulley; 36. Ninth movable pulley; 37. Third crossbeam; 38. Fixed pulley.

**Detailed Embodiments**

The specific embodiments of the present invention will be further described below with reference to the accompanying drawings.

Embodiment 1

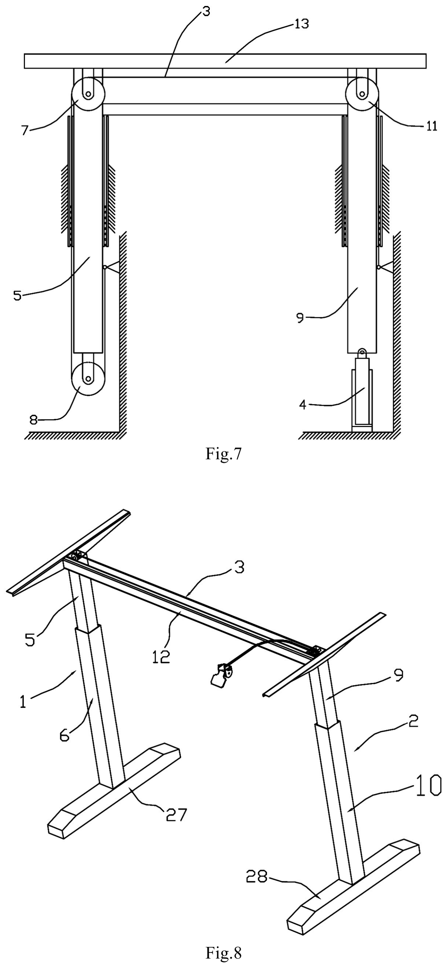

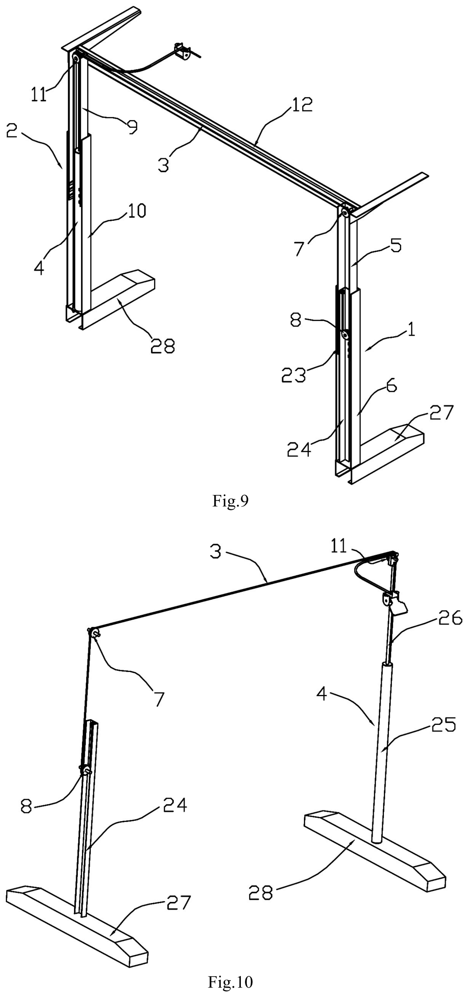

As the single power source lifting and folding mechanism shown in Figures 8 to 11. In the furniture field, the lifting of the furniture tabletop is also called folding. The single power source lifting and folding mechanism comprises a first lifting mechanism (1), a second lifting mechanism (2), a first flexible cable (3) and a driving device (4). The first lifting mechanism (1) includes a first movable component (5) and a first fixed component. The first fixed component in this embodiment includes a first fixed component body (6) and a first support plate (27). The bottom end of the first fixed component body is fixedly connected to the first support plate (27), and the first support plate (27) and the first fixed component body are in an inverted T-shape as a whole. The first support plate (27) increases the contact area between the first lifting mechanism (1) and the ground, improving stability. The first movable component (5) is mounted on the first fixed component body (6) and forms a prismatic pair with the first fixed component body (6). Both the first movable component (5) and the first fixed component body (6) in this embodiment are tubular, and have the same cross-sectional shape, which can be a regular shape such as triangle, quadrilateral and pentagon, or other irregular shapes. The first fixed component body (6) is sleeved on the first movable component (5), and a sliding guide assembly (23) is arranged on the first movable component (5) to guide the sliding of the first movable component (5) inside the first fixed component body (6). The sliding guide assembly (23) in this embodiment includes a fixed sleeve fixed on the first sliding component (5) and a sliding part rotatably arranged on the fixed sleeve. The sliding part can be a ball, roller, wheel, etc. The sliding part facilitates the up and down sliding of the first movable component (5) relative to the first fixed component body (6). In this embodiment, a first movable pulley (7) and a second movable pulley (8) are respectively rotatably mounted on the upper part and lower part of the first movable component (5) by using rotating shafts. Optimally, the first movable pulley (7) and the second movable pulley (8) are respectively mounted on the top and bottom of the first movable component (5) in this embodiment.

The second lifting mechanism (2) in this embodiment includes a second movable component (9) and a second fixed component. The second fixed component in this embodiment includes a second fixed component body (10) and a second support plate (28). The bottom end of the second fixed component body (10) is fixedly connected to the second support plate (28), and the second support plate (28) and the second fixed component are in an inverted T-shape. The second support plate (28) increases the contact area between the second lifting mechanism (2) and the ground in use. The second movable component (9) is slidably mounted on the second fixed component body (10). The second movable component (9) in this embodiment has the same shape and height as the first movable component (5), and the second fixed component body (10) has the same shape and height as the first fixed component body (6). In this embodiment, a third movable pulley (11) is rotatably mounted on the upper part of the second movable component (9) by using a rotating shaft. The third movable pulley (11) in this embodiment is at the same height as the first movable pulley (7). Optimally, the third movable pulley (11) is mounted on the top of the second movable component (9) in this embodiment. The second movable component (9) in this embodiment is also slidably mounted in the second fixed component body (10) by using the sliding guide assembly (23).

The first movable component (5) and the second movable component (9) in this embodiment are used to connect the first crossbeam (12) or the tabletop (13) in use. One end of the first flexible cable (3) is fixedly connected to the first fixed component (e.g., by welding) above the second movable pulley (8). The other end of the first flexible cable (3) bypasses the second movable pulley (8) downward, then bypasses the first movable pulley (7) upward, bypasses the third movable pulley (11) toward the second movable component (9) along the horizontal direction, and then is fixedly connected to the second fixed component (e.g., by welding) downward.

The driving device (4) in this embodiment is mounted on the second support plate (28) of the second fixed component and connected to the second movable component (9), the first crossbeam (12) or the tabletop (13). The driving device (4) directly or indirectly abuts against the rotating shaft of the third movable pulley (11) and tensions the first flexible cable (3) through the second movable component (9), the first crossbeam (12) or the tabletop (13). The driving device (4) drives the side of the first crossbeam (12) or the tabletop (13) connected to the second movable component (9), or the second movable component (9) to lift and lower, drives the first flexible cable (3) to transmit pulling force and play a pulling and limiting role to the first lifting mechanism (1), and drives the other side of the first crossbeam (12) or the tabletop (13) and the second movable component (9) to lift and lower synchronously. The driving device (4) in this embodiment preferably adopts a gas spring. The pressure cylinder (25) of the gas spring is mounted on the second support plate (28) of the second fixed component; the piston rod (26) of the gas spring expands and contracts in the vertical direction; the end of the piston rod (26) of the gas spring is connected to the second movable component (9), the first crossbeam (12) or the tabletop (13); and the expansion and contraction of the piston rod (26) of the gas spring is used to drive the second movable component (9), the first crossbeam (12) or the tabletop (13) to lift and lower. In this embodiment, the piston rod (26) of the gas spring can also be connected to the second support plate (28) of the second fixed component, and the pressure cylinder (25) of the gas spring can be connected to the second movable component (9), the first crossbeam (12) or the tabletop (13). The gas spring in this embodiment can also be replaced by a hydraulic cylinder, a pneumatic cylinder, an electric push rod, a manual drive push rod, etc.

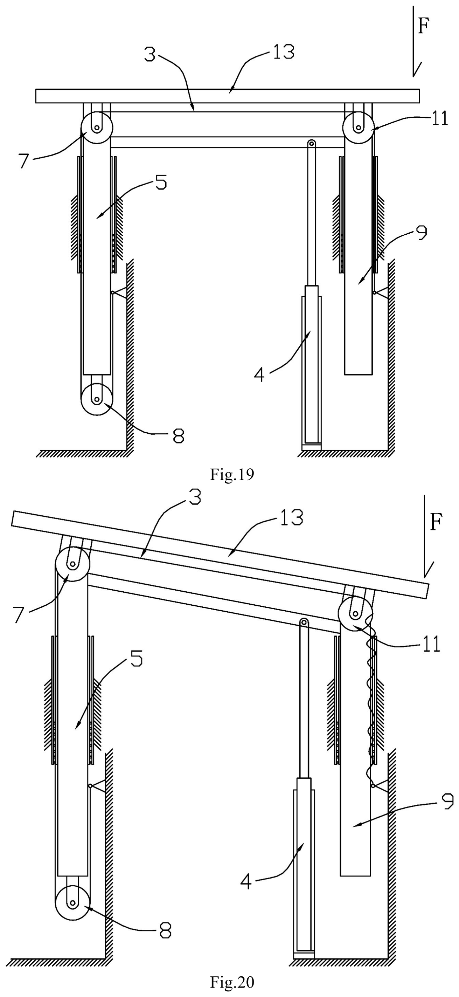

The reason why the driving device (4) in this embodiment needs to directly or indirectly abut against the rotating shaft of the third movable pulley (11) and tension the first flexible cable (3) is analyzed as follows: As shown in Figure 19, when the driving device (4) does not directly or indirectly abut against the rotating shaft of the third movable pulley (11) and tension the first flexible cable (3) within the support range of the second lifting mechanism (2) (e.g., the driving device (4) is arranged on the side of the second lifting mechanism (2) and close to the first lifting mechanism (1)), if an external force F is applied to the side far from the first lifting mechanism (1) beyond the support range of the second lifting mechanism (2), the side of the tabletop (13) far from the first lifting mechanism (1) will move downward first, as shown in Figure 20, which will cause the entire tabletop to be in an unstable and unbalanced state, making it impossible for all parts of the tabletop to lift and lower synchronously. The solution for the driving device (4) in this embodiment to directly or indirectly abut against the rotating shaft of the third movable pulley (11) and tension the first flexible cable (3) is to arrange the driving device (4) within the support range of the second lifting mechanism (2). As shown in Figure 21, for example, the driving device (4) is arranged inside the second lifting mechanism (2) and directly connected to the second movable component (9), which is the optimal solution of this embodiment; or as shown in Figure 22, the driving device (4) supports the tabletop (13) on the side far from the first lifting mechanism (1). In this case, after the driving device (4) abuts against the rotating shaft of the third movable pulley (11), the first flexible cable (3) is in a tensioned state; when the tabletop (13) is pressed downward, the driving device (4) abuts against the rotating shaft of the third movable pulley (11), and the first flexible cable (3) remains in a tensioned state.

The principle of the gas spring in this embodiment driving the first lifting mechanism (1) and the second lifting mechanism (2) to lift and lower synchronously is as follows: When the gas spring drives the second movable component (9), the first crossbeam (12) or the tabletop (13) to rise, the first flexible cable (3) transmits power to pull the first movable component (5) to rise synchronously by an equal distance, thereby realizing the synchronous rise of the first lifting mechanism (1) and the second lifting mechanism (2). When the second movable component (9), the first crossbeam (12) or the tabletop (13) moves downward (e.g., the first crossbeam (12) or the tabletop (13) is pressed downward), the first flexible cable (3) exerts a pulling and limiting role on the first movable pulley (7) and the second movable pulley (8), and drives the first crossbeam (12) or the tabletop (13) and the first movable component (5) to descend synchronously, thereby realizing the synchronous descent of the first lifting mechanism (1) and the second lifting mechanism (2).

The first flexible cable (3) in this embodiment can be any one of various rubber belts, ropes, steel wires, steel belts, fiber belts, fiber filaments, chains, etc. Correspondingly, the first movable pulley (7), the second movable pulley (8) and the third movable pulley (11) adopt pulleys, sprockets, etc. adapted to the first flexible cable (3).

The principle of the cooperation and movement between the first flexible cable (3) and the first movable pulley (7), the second movable pulley (8) and the third movable pulley (11) in this embodiment is described as follows: It is well-known that a pulley whose shaft moves along with the pulled object is called a movable pulley. The first movable pulley (7) and the second movable pulley (8) in this embodiment are both mounted on the first movable component (5), so when the first movable component (5) moves up and down, the shafts of the first movable pulley (7) and the second movable pulley (8) move up and down accordingly. Therefore, the first movable pulley (7) and the second movable pulley (8) in this embodiment are both movable pulleys. The third movable pulley (11) is mounted on the second movable component (9), and the second movable component (9) also moves up and down in use, so the third movable pulley (11) in this embodiment is also a movable pulley.

In general, several movable pulleys cannot effectively form a fully functional independent pulley block without the participation of fixed pulleys. However, in the present application, since the first movable component (5) and the second movable component (9) slide relative to the first fixed component body (6) and the second fixed component body (10) respectively, an independent pulley block is formed in the present invention and fully functions. In a general parallel double-cable system with a single movable pulley, the extension distance (LE1) of the free end (LF) of the flexible cable is twice the moving distance (LD1) of the movable pulley, i.e., LE1 = 2×LD1. However, in the present invention, by using the relative sliding between the first movable component (5) and the first fixed component body (6), the extension distance (LE3) of the free end (LF) of the flexible cable connected to the rigidly connected movable pulley combination (i.e., the first movable pulley (7), the second movable pulley (8) and the first movable component (5)) is equal to the moving distance (LD3) of the movable pulleys (i.e., the first movable pulley (7) and the second movable pulley (8)) of the rigidly connected movable pulley combination. At the same time, in the movable pulley system connected with the second movable component (9) and the second fixed component body (10) in a matching manner, the retraction distance (RE1) of the free end (RF) of the first flexible cable (3) is equal to the moving distance (RD1) of the pulley block. The free ends (LF and RF) of the first flexible cable (3) connecting the first lifting mechanism (1) and the second lifting mechanism (2) just extend and retract respectively, and the extension and retraction values of the first lifting mechanism (1) and the second lifting mechanism (2) are completely equal. Therefore, when the free ends (LF and RF) of the flexible cable are overlapped and connected, the first movable pulley (7), the second movable pulley (8) and the third movable pulley (11) form a single pulley block. With the single pulley block, one first flexible cable, two parallel first lifting mechanisms (1) and second lifting mechanisms (2), the first crossbeam (12) or the tabletop (13), and one driving device (4), the problem of synchronous lifting and folding of the lifting and folding mechanism is solved.

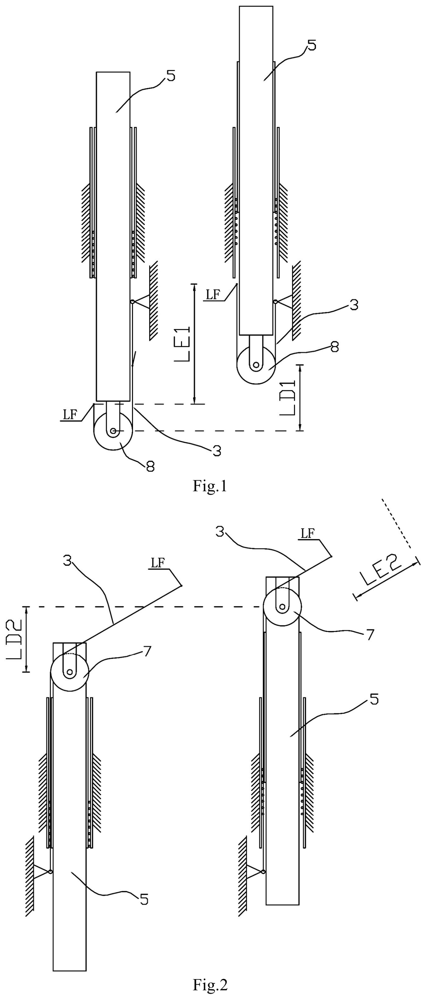

As shown in Figure 1, the first movable component (5) moves upward, and only the second movable pulley (8) is mounted at its lower end. The first flexible cables (3) on both sides of the single second movable pulley (8) are parallel to each other and parallel to the sliding direction of the first movable component (5). The free end (LF) of the first flexible cable (3) extends, and the moving displacement (LE1) is twice the moving displacement (LD1) of the second movable pulley (8), and the directions are the same, i.e.: LE1 = 2×LD1.

As shown in Figure 2, only the single first movable pulley (7) is mounted at the top end of the first movable component (5). The first flexible cables (3) on both sides of the single first movable pulley (7) are non-parallel, and only the first flexible cable (3) on one side is parallel to the moving direction of the first movable component (5). The free end (LF) of the first flexible cable (3) on the other side slides at an included angle (BL) with the horizontal direction. The free end (LF) of the first flexible cable (3) contracts toward the first movable pulley (7), and the contracted displacement (LE2) is numerically equal to the upward moving displacement (LD2) of the first movable pulley (7). Since the first movable pulley (7) moves upward and the free end (LF) of the first flexible cable (3) contracts, it can be obtained that: LE2 = -LD2.

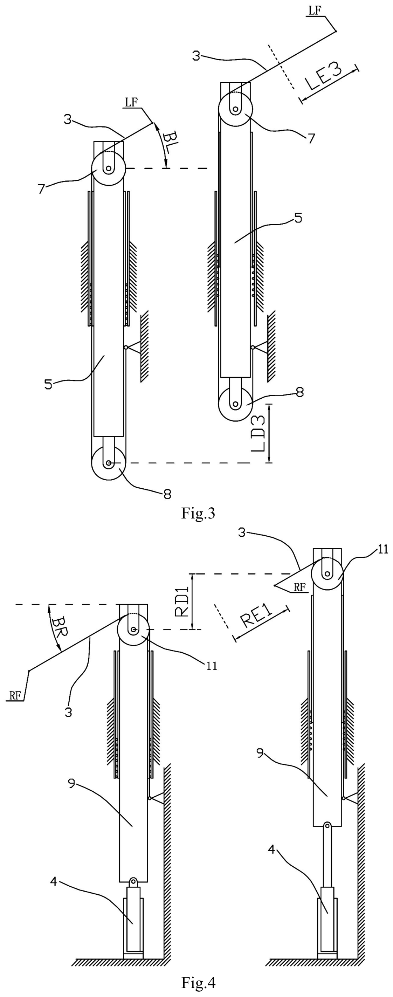

As shown in Figure 3, the first movable pulley (7), the second movable pulley (8), the first movable component (5) and the first flexible cable (3) are combined together. The first movable pulley (7) and the second movable pulley (8) are respectively mounted at the top end and bottom end of the first movable component (5) to form a rigidly connected movable pulley group, which is parallel to the sliding direction of the first movable component (5). At this time, the moving displacement of the first flexible cable (3) is (LE3), and the moving displacement of the movable pulley group composed of the first movable pulley (7), the second movable pulley (8) and the first movable component (5) is (LD3). At this time:

$$LE3 = LE1 + LE2$$

Since:

$$LE1 = 2 \times LD1, LE2 = -LD2$$

Thus:

$$LE3 = 2 \times LD1 + (-LD2)$$

In addition, when the movement trajectories of the first movable component (5) in Figures 1, 2 and 3 are the same, the displacement of the second movable pulley (8) is the same,

i.e.:

$$LD1 = LD2 = LD3$$

Thus:

$$LE3 = 2 \times LD3 + (-LD3)$$

Then:

$$LE3 = LD3$$

Therefore, the extension displacement (LE3) of the free end (LF) of the first flexible cable (3) of the rigidly connected movable pulley subgroup is numerically equal to the moving displacement (LD3) of the movable pulleys of the rigidly connected movable pulley subgroup.

As shown in Figure 4, the second movable component (9) moves upward, and only the third movable pulley (11) is mounted at its top end. The first flexible cables (3) on both sides of the single third movable pulley (11) are non-parallel, and only the first flexible cable (3) on one side is parallel to the sliding direction of the second movable component (9). The free end of the first flexible cable (3) on the other side slides at an included angle (BR) with the horizontal direction. At this time, the free end (RF) of the first flexible cable (3) contracts, and the contracted moving displacement (RE1) is numerically equal to the displacement (RD1) of the third movable pulley (11). Since the third movable pulley (11) moves upward and the first flexible cable (3) contracts, it can be obtained that:

$$RE1 = -RD1$$

When the free ends (LF and RF) of the first flexible cable (3) are overlapped, connected and tensioned,

i.e., when

$$LE3 + RE1 = 0,$$

it can be obtained that:

$$LD3 + (-RD1) = 0$$

Then:

$$LD3 = RD1$$

Therefore, at this time, the displacement of the first movable component (5) is numerically equal to that of the second movable component (9), and the displacement directions are the same.

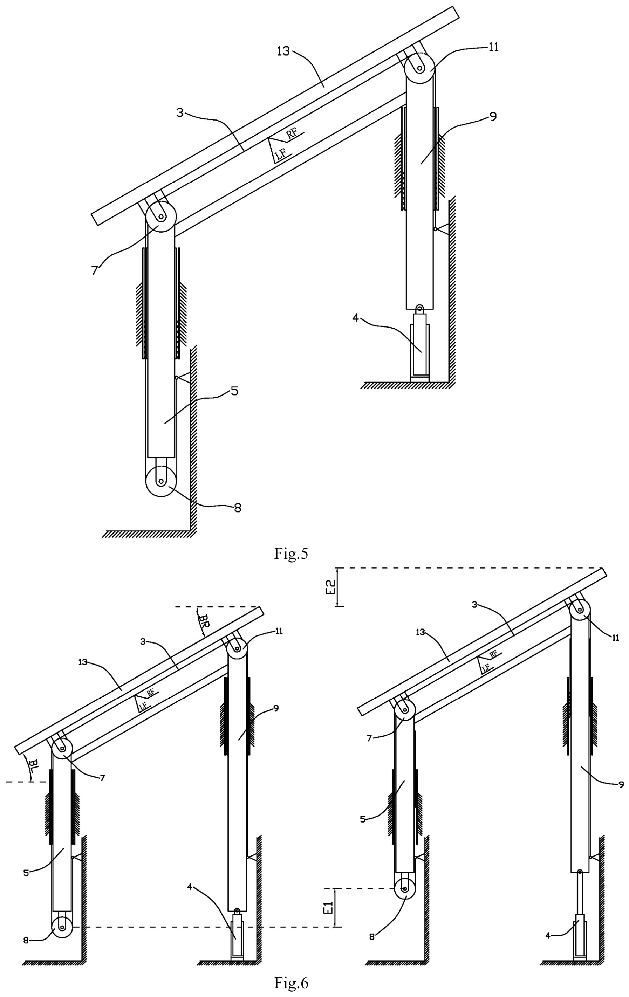

As shown in Figures 5, 6 and 7, when the free ends (LF and RF) of the first flexible cable (3) are overlapped, connected and tensioned, the rigidly connected movable pulley subgroup composed of the first movable pulley (7) and the second movable pulley (8) on the first movable component (5) and the third movable pulley (11) on the second movable component (9) form a large rigidly connected movable pulley group, i.e., the first movable pulley (7), the second movable pulley (8) and the third movable pulley (11) are combined into a large single pulley block. At this time, the first movable component (5) and the second movable component (9) are connected by the single first crossbeam (12) or the panel (13), or the first crossbeam (12) or the panel (13) to form a synchronous lifting frame. The first movable component (5) is in sliding fit with the first fixed component body (6), and the second movable component (9) is in sliding fit with the second fixed component body (10). One end of a first flexible cable (3) is fixed on the first fixed component, then connected to the first movable pulley (7) and the second movable pulley (8) on the first movable component (5), connected to the third movable pulley (11) on the second movable component (9), and then fixed on the second fixed component body (10). A single driving device (4) is supported and rigidly fixedly connected to the synchronous lifting frame and the second fixed component. The displacement value (E1) of the first movable component (5) driven by the driving device (4) is equal to the displacement value (E2) of the second movable component (9), and the displacement directions are the same. Therefore, a synchronous lifting and folding mechanism capable of synchronous lifting is formed.

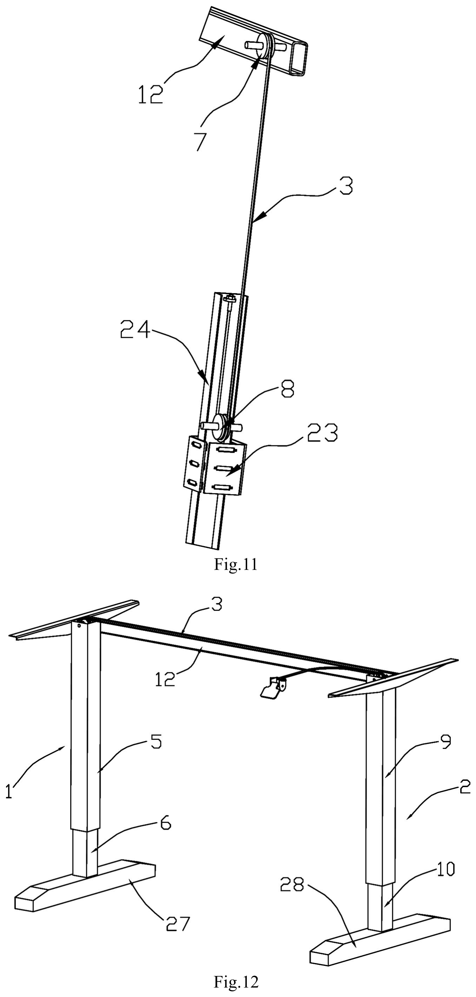

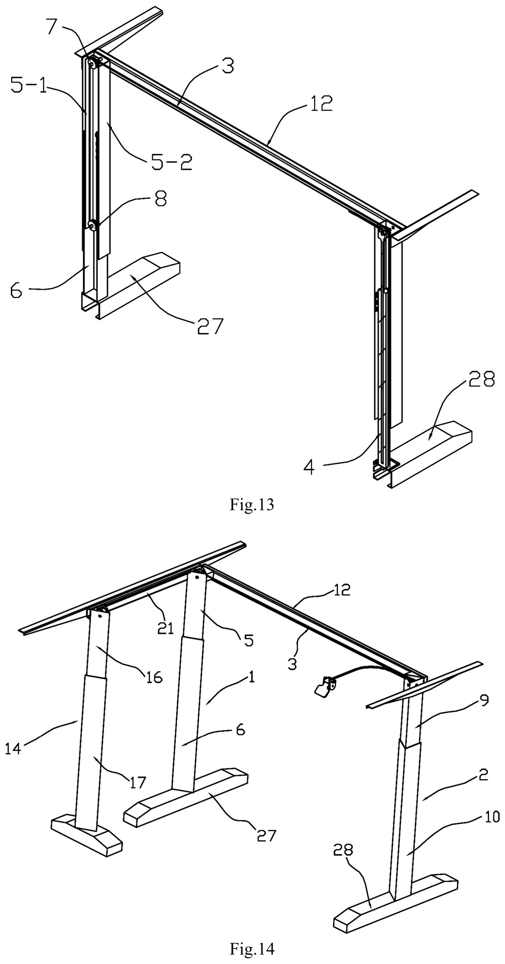

As shown in Figures 12 and 13, in this embodiment, the first movable component (5) can also be sleeved on the first fixed component body (6) while maintaining relative sliding between them, and the second movable component (9) can be sleeved on the second fixed component body (10) while maintaining relative sliding between them. The first movable component (5) and the second movable component (9) of this structure are the same in structure. This embodiment takes the first movable component (5) as an example for illustration: the first movable component (5) includes an inner movable component body (5-1) and an outer movable component body (5-2); the inner movable component body (5-1) extends into the first fixed component body (6) from the top of the first fixed component body (6); the outer movable component body (5-2) is sleeved on the outside of the first fixed component body (6); the first movable pulley (7) and the second movable pulley (8) are respectively mounted on the inner movable component body (5-1); the rotating shaft of the first movable pulley (7) passes through the inner movable component body (5-1) and is connected to the outer movable component body (5-2); and the rotating shaft of the second movable pulley (8) is only connected to the inner movable component body (5-1) and does not contact the first fixed component body (6). The inner movable component body (5-1) in this embodiment is preferably made of channel steel.

Embodiment 2

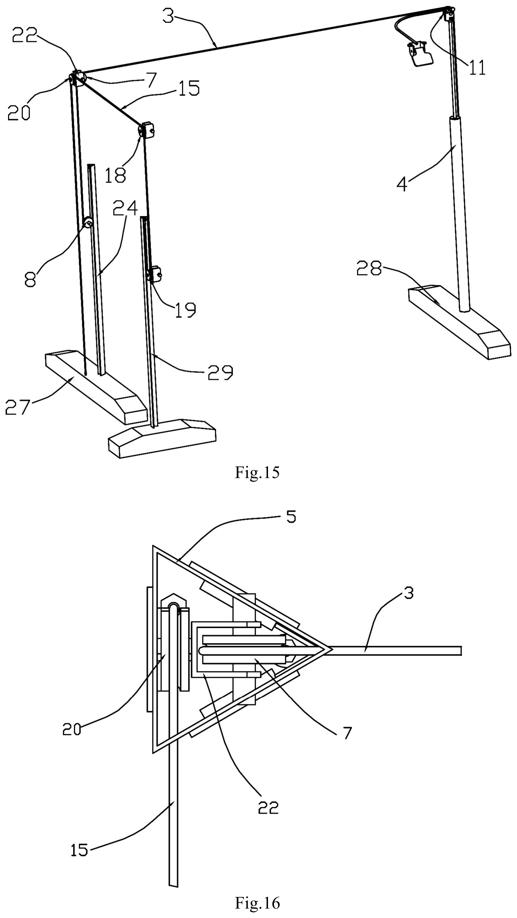

This embodiment is a further improvement based on Embodiment 1. Compared with Embodiment 1, as shown in Figures 14 to 16, this embodiment is further provided with a third lifting mechanism (14) and a second flexible cable (15). The third lifting mechanism (14) includes a third movable component (16) and a third fixed component. The third fixed component in this embodiment includes a third fixed component body (17) and a third support plate. The bottom end of the third fixed component body (17) is fixedly connected to the third support plate and is in an inverted T-shape. The third movable component (16) is arranged on the third fixed component body (17) and can slide on the third movable component (16). The third movable component (16) in this embodiment has the same shape and height as the second movable component (9), and the third fixed component body (17) has the same shape and height as the second fixed component body (10). The third movable component (16) is also slidably mounted with the third fixed component body (17) by using the sliding guide assembly (23). In this embodiment, a fourth movable pulley (18) and a fifth movable pulley (19) are respectively rotatably arranged on the upper part and lower part of the third movable component (16). Optimally, the fourth movable pulley (18) and the fifth movable pulley (19) are respectively mounted on the top end and bottom end of the third movable component (16) in this embodiment. A sixth movable pulley (20) is rotatably mounted on the upper part of the first movable component (5) or the second movable component (9). The top end of the third movable component (16) is connected to the tabletop (13) in use, or connected to the first movable component (5) or the second movable component (9) by using a second crossbeam (21). One end of the second flexible cable (15) is fixedly connected to the third fixed component above the fifth movable pulley (19). The other end of the second flexible cable (15) bypasses the fifth movable pulley (19), the fourth movable pulley (18) and the sixth movable pulley (20) in sequence, and then is fixedly connected to the first fixed component or the second fixed component. The second flexible cable (15) is in a tensioned state, so that the third movable component (16) is lifted and lowered synchronously with the first movable component (5) and the second movable component (9). The first movable component (5), the first fixed component body (6), the second movable component (9), the second fixed component body (10), the third movable component (16) and the third fixed component body (17) in this embodiment all adopt a tubular structure with a triangular cross-section.

In this embodiment, the sixth movable pulley (20) is optimally rotatably mounted on the top end of the first movable component (5). To facilitate the mounting of the sixth movable pulley (20) and the first movable pulley (7) on the first movable component (5), a pulley mounting seat (22) is mounted on the upper part of the first movable component (5) in this embodiment. The pulley mounting seat (22) moves synchronously with the movement of the first movable component (5). Both the first movable pulley (7) and the sixth movable pulley (20) are rotatably mounted on the pulley mounting seat (22) by using rotating shafts. Correspondingly, the second movable pulley (8), the third movable pulley (11), the fourth movable pulley (18) and the fifth movable pulley (19) in this embodiment are respectively mounted by using corresponding pulley mounting seats.

When the first movable component (5) moves upward in this embodiment, the second flexible cable (15) pulls the third movable component (16) to move upward on the third fixed component body (17) by a distance equal to the upward moving distance of the first movable component (5), so that the first movable component (5), the second movable component (9) and the third movable component (16) move downward synchronously. When the first movable component (5) moves downward, the second flexible cable (15) exerts a pulling and limiting role on the fourth movable pulley (18) and the fifth movable pulley (19), and drives the second crossbeam (21) or the tabletop (13) and the third movable component (16) to descend synchronously, thereby realizing the synchronous descent of the first lifting mechanism (1), the second lifting mechanism (2) and the third lifting mechanism (14).

The first lifting mechanism (1), the second lifting mechanism (2) and the third lifting mechanism (14) in this embodiment can be distributed in a straight line or a triangle. The rest of the structure of this embodiment is the same as that of Embodiment 1, and reference can be made to Embodiment 1 for details, which will not be repeated in this embodiment.

Embodiment 3

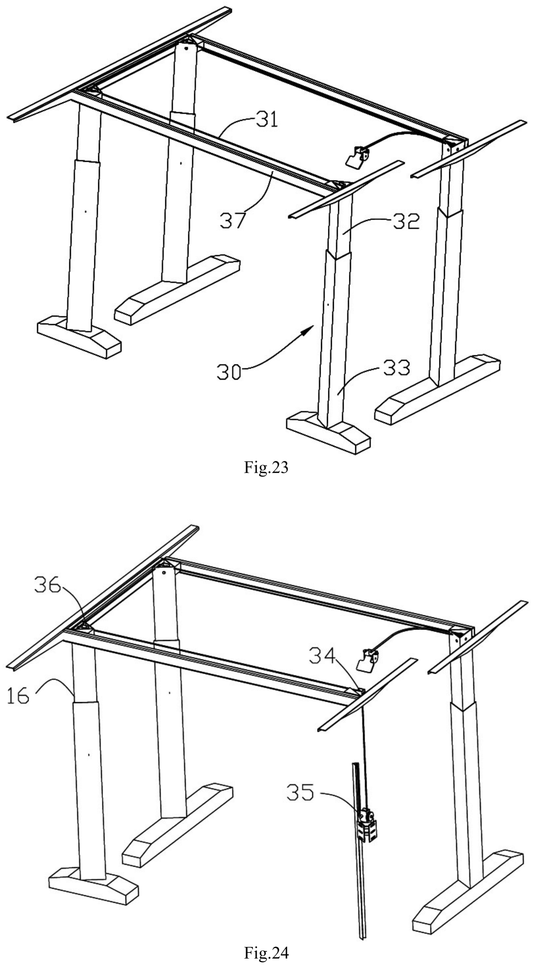

This embodiment is a further improvement based on Embodiment 2. Compared with Embodiment 2, this embodiment is further provided with more than one fourth lifting mechanism (30) and a number of third flexible cables (31) equal to that of the fourth lifting mechanisms. The fourth lifting mechanism includes a fourth movable component (32) and a fourth fixed component body (33). As shown in Figure 23, the fourth fixed component in this embodiment includes a fourth fixed component body (33) and a fourth support plate. The bottom end of the fourth fixed component body is fixedly connected to the fourth support plate and is in an inverted T-shape. The fourth movable component (32) is slidably arranged on the fourth fixed component body (33). A seventh movable pulley (34) and an eighth movable pulley (35) are respectively rotatably arranged on the upper part and lower part of the fourth movable component, as shown in Figure 24. A ninth movable pulley (36) is rotatably mounted on the upper part of the first movable component (5), the second movable component (9) or the third movable component (16). The top of the fourth movable component is connected to the tabletop (13) in use, or connected to the first movable component (5), the second movable component (9) or the third movable component (16) by using a third crossbeam (37). One end of the third flexible cable is fixedly connected to the fourth fixed component above the eighth movable pulley. The other end of the third flexible cable bypasses the eighth movable pulley, the seventh movable pulley and the ninth movable pulley in sequence, and then is fixedly connected to the first fixed component, the second fixed component or the third fixed component. The third flexible cable is in a tensioned state, so that the fourth movable component is lifted and lowered synchronously with the first movable component (5), the second movable component (9) and the third movable component (16). The structure of the fourth lifting mechanism in this embodiment is the same as that of the first lifting mechanism (1).

The number of the fourth lifting mechanisms in this embodiment can be one or more. When the number of the fourth lifting mechanisms is one, the end of the third flexible cable far from the fourth lifting mechanism can be fixedly connected to any one of the first fixed component, the second fixed component and the third fixed component. When the number of the fourth lifting mechanisms is two or more, one end of one of the third flexible cables is fixedly connected to the fourth fixed component, and the other end is fixedly connected to the first fixed component, the second fixed component or the third fixed component; and one end of the other third flexible cables is fixedly connected to the fourth fixed component, and the other end can be fixedly connected to the first fixed component, the second fixed component, the third fixed component or the aforementioned fourth fixed component. By transmitting pulling force and playing a pulling and limiting role via the fourth flexible cable, all the fourth lifting mechanisms are lifted and lowered synchronously with the first lifting mechanism (1), the second lifting mechanism (2) and the third lifting mechanism (14).

The first lifting mechanism (1), the second lifting mechanism (2), the third lifting mechanism (14) and the fourth lifting mechanisms in this embodiment can be arranged in a straight line, a triangle, a polygon or other irregular shapes. In use, the present invention can arrange an appropriate number of fourth lifting mechanisms according to the size of the tabletop (13) to be supported, and set the arrangement mode of the first lifting mechanism (1), the second lifting mechanism (2), the third lifting mechanism (14) and the fourth lifting mechanisms according to the shape of the supported tabletop (13). The rest of the structure of this embodiment is the same as that of Embodiment 2, and reference can be made to Embodiment 2 for details, which will not be repeated in this embodiment.

Embodiment 4

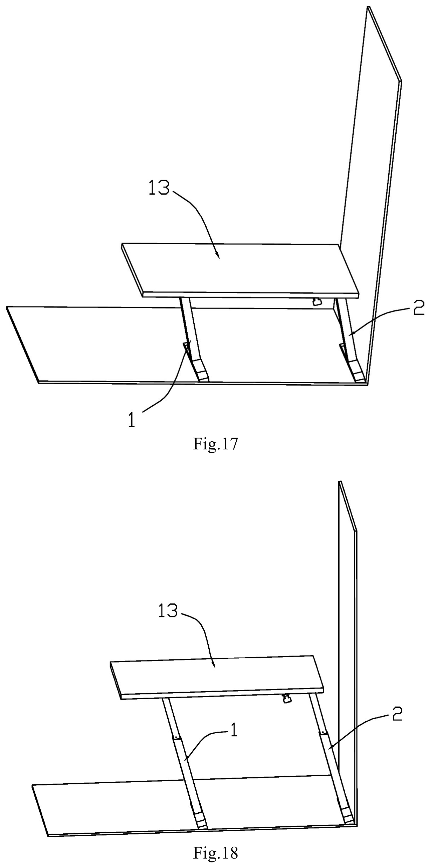

This embodiment is a further improvement based on Embodiment 3. Compared with Embodiment 3, the first lifting mechanism (1), the second lifting mechanism (2), the third lifting mechanism (14) and all the fourth lifting mechanisms in this embodiment are parallel and form an included angle with the vertical direction, as shown in Figures 17 and 18. The rest of the structure of this embodiment is the same as that of Embodiment 3, and reference can be made to Embodiment 3 for details, which will not be repeated in this embodiment.

Embodiment 5

The solution of this embodiment is a piece of furniture, which includes the single power source lifting and folding mechanism of any one of Embodiments 1 to 4. The tabletop (13) of the furniture is fixedly connected to the top of the single power source lifting and folding mechanism. The lifting of the single power source lifting and folding mechanism is used to adjust the height of the furniture tabletop (13). The furniture in this embodiment can be a table, where the tabletop (13) is a tabletop. The cross-sectional shape of the tabletop (13) in this embodiment can be a triangle, a quadrilateral, other polygons, a shape with outwardly protruding edges (such as circle ,ellipse or ,or L-shaped), or a shape with slightly inwardly recessed edges (such as a plum blossom shape). The lifting mechanisms (table legs of the furniture) are arranged corresponding to the shape of the tabletop (13) to keep the first flexible cable (3), the second flexible cable (15) and the third flexible cable all located below the tabletop (13).

Embodiment 6

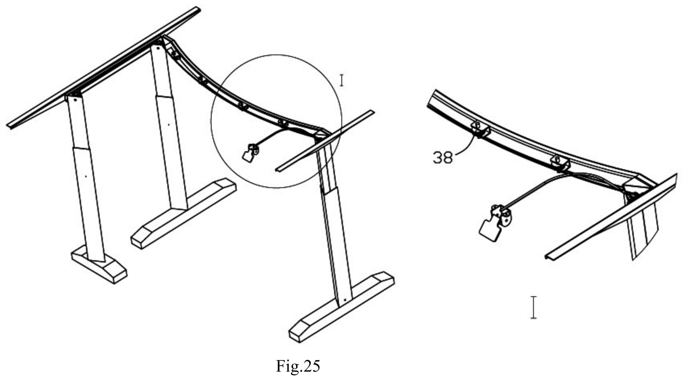

The solution of this embodiment is a piece of furniture, which includes the single power source lifting and folding mechanism in Embodiment 5. The single power source lifting and folding mechanism includes a third lifting mechanism (14) and at least one fourth lifting mechanism. This embodiment still takes a table as an example for illustration, where the tabletop (13) is a tabletop, and the tabletop is in an irregular shape with more inwardly recessed edges (such as a U-shaped tabletop). The tabletop (13) of the furniture is fixedly connected to the top of the single power source lifting and folding mechanism. The lifting of the single power source lifting and folding mechanism is used to adjust the height of the furniture tabletop (13). As shown in Figure 25, in this embodiment, more than one fixed pulley (38) is mounted at the bottom of the tabletop (13); the first flexible cable (3) and/or the second flexible cable (15) and/or the third flexible cable bypasses the fixed pulley, so that the first flexible cable (3) and/or the second flexible cable (15) and/or the third flexible cable are all located below the tabletop (13).

The parts not specifically described in the above specification are all prior art or can be realized by using prior art. Moreover, the specific implementation cases described in the present invention are only preferred implementation cases of the present invention, and are not used to limit the scope of implementation of the present invention. That is, all equivalent changes and modifications made according to the content of the patent scope of the present invention shall fall within the technical scope of the present invention.

**Claims**

1. A single power source lifting and folding mechanism, **characterized in that** it comprises a first lifting mechanism (1), a second lifting mechanism (2), a first flexible cable (3) and a driving device (4); the first lifting mechanism (1) includes a first movable component (5) and a first fixed component; the first movable component (5) is mounted on the first fixed component and forms a prismatic pair with the first fixed component; the upper part and lower part of the first movable component (5) are respectively equipped with a first movable pulley (7) and a second movable pulley (8); the second lifting mechanism (2) includes a second movable component (9) and a second fixed component; the second movable component (9) is slidably mounted on the second fixed component; the upper part of the second movable component (9) is equipped with a third movable pulley (11); one end of the first flexible cable (3) is fixedly connected to the first fixed component, and the other end of the first flexible cable (3) is fixedly connected to the second fixed component after bypassing the second movable pulley (8), the first movable pulley (7) and the third movable pulley (11); the driving device (4) is mounted on the second fixed component, and the driving device (4) directly or indirectly abuts against the rotating shaft of the third movable pulley (11) and tensions the first flexible cable (3).

2. The single power source lifting and folding mechanism according to claim 1, **characterized in that** it further comprises a third lifting mechanism (14) and a second flexible cable (15); the third lifting mechanism (14) includes a third movable component (16) and a third fixed component; the third movable component (16) is arranged on the third fixed component and can slide on the third movable component (16); the upper part and lower part of the third movable component (16) are respectively provided with a fourth movable pulley (18) and a fifth movable pulley (19); a sixth movable pulley (20) is rotatably mounted on the upper part of the first movable component (5) or the second movable component (9); one end of the second flexible cable (15) is fixedly connected to the third fixed component, and the other end of the second flexible cable (15) is fixedly connected to the first fixed component or the second fixed component after bypassing the fifth movable pulley (19), the fourth movable pulley (18) and the sixth movable pulley (20); and the second flexible cable (15) is in a tensioned state.

3. The single power source lifting and folding mechanism according to claim 2, **characterized in that** a pulley mounting seat (22) is mounted on the upper part of the first movable component (5); the pulley mounting seat (22) moves synchronously with the movement of the first movable component (5); and both the first movable pulley (7) and the sixth movable pulley (20) are mounted on the pulley mounting seat (22).

4. The single power source lifting and folding mechanism according to claim 2, **characterized in that** it further comprises more than one fourth lifting mechanism and a number of third flexible cables equal to that of the fourth lifting mechanisms; the fourth lifting mechanism includes a fourth movable component and a fourth fixed component; the fourth movable component is slidably arranged on the fourth fixed component; the upper part and lower part of the fourth movable component are respectively rotatably provided with a seventh movable pulley and an eighth movable pulley; a ninth movable pulley is rotatably mounted on the upper part of the first movable component (5), the second movable component (9) or the third movable component (16); one end of the third flexible cable is fixedly connected to the fourth fixed component, and the other end of the third flexible cable is fixedly connected to the first fixed component, the second fixed component or the third movable component (16) after bypassing the eighth movable pulley, the seventh movable pulley and the ninth movable pulley; and the third flexible cable is in a tensioned state, so that the fourth movable component is lifted and lowered synchronously with the first movable component (5), the second movable component (9) and the third movable component (16).

5. The single power source lifting and folding mechanism according to claim 1, **characterized in that** both the first movable component (5) and the first fixed component are tubular; the first fixed component is sleeved on the first movable component (5); and a sliding guide assembly (23) is arranged on the first movable component (5) to guide the sliding of the first movable component (5) inside the first fixed component.

6. The single power source lifting and folding mechanism according to claim 5, **characterized in that** the first fixed component comprises a first fixed component body and a first fixed rod (24); the first movable component (5) is slidably mounted with the first fixed component body; the first fixed rod (24) extends into the first movable component (5), and the top end of the first fixed rod (24) is higher than the second movable pulley (8); and the end of the first flexible cable (3) is fixedly connected to the upper part of the first fixed rod (24).

7. The single power source lifting and folding mechanism according to claim 6, **characterized in that** the first fixed rod (24) is made of metal profile, bar or pipe.

8. The single power source lifting and folding mechanism according to claim 1, **characterized in that** the first lifting mechanism (1) and the second lifting mechanism (2) are parallel and form an included angle with the vertical direction.

9. A piece of furniture, **characterized in that** it comprises the single power source lifting and folding mechanism according to any one of claims 1 to 8; the tabletop (13) of the furniture is fixedly connected to the top of the single power source lifting and folding mechanism; and the lifting of the single power source lifting and folding mechanism is used to adjust the height of the furniture tabletop (13).

10. The furniture according to claim 9, **characterized in that** more than one fixed pulley is mounted at the bottom of the tabletop (13); the first flexible cable (3) and/or the second flexible cable (15) and/or the third flexible cable bypasses the fixed pulley, so that the first flexible cable (3) and/or the second flexible cable (15) and/or the third flexible cable are all located below the tabletop (13).

Fig.1

Fig.2

Fig.3

Fig.4

Fig.5

Fig.6

Fig.7

Fig.8

Fig.9

Fig.10

Fig.11

Fig.12

Fig.13

Fig.14

EP 4 684 691 A1

Fig.15

Fig.16

13

2

1

Fig.17

13

1

2

Fig.18

Fig.19

Fig.20

Fig.21

Fig.22

Fig.23

Fig.24

Fig.25

38

## INTERNATIONAL SEARCH REPORT

| International application No. |
| --- |
| **PCT/CN2024/082008** |

| A. | CLASSIFICATION OF SUBJECT MATTER |
| --- | --- |
| | A47B9/12(2006.01)i |

According to International Patent Classification (IPC) or to both national classification and IPC

| B. | FIELDS SEARCHED |
| --- | --- |

Minimum documentation searched (classification system followed by classification symbols)

IPC: A47B

Documentation searched other than minimum documentation to the extent that such documents are included in the fields searched

Electronic data base consulted during the international search (name of data base and, where practicable, search terms used)

CNTXT, ENTXTC, VEN, WPABSC: 滚轮, 滑轮, 传动, 拉索, 拉线, 绳, 柔索, 同步, 同时, 一起, 一同, 带动, 传动, 上升, 下降, 升降, 单个, 一个, 气弹簧, 气动, 气缸, 驱动, 三, 多, 推杆, 腿, 支撑, 立柱, 桌, table, height, adjust+, lift+, pulley, synchron+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116195832 A (QIAO, Bin) 02 June 2023 (2023-06-02) <br> description, paragraphs 43-66, and figures 1-22 | 1-10 |
| X | CN 111109841 A (NINGBO HAISHIKAI DRIVING TECHNOLOGY CO., LTD.) 08 May 2020 (2020-05-08) <br> description paragraphs 33-50, figures 1-6 | 1-10 |
| X | CN 107125919 A (FOSHAN DESIGNA TECHNOLOGY CO., LTD.) 05 September 2017 (2017-09-05) <br> description, paragraphs 22-29, and figures 1-2 | 1, 5-10 |
| A | CN 106714616 A (ERGOTRON INC) 24 May 2017 (2017-05-24) <br> entire document | 1-10 |
| A | CN 211901518 U (ZHONGSHAN JIJIA TRANSMISSION TECHNOLOGY CO. LTD.) 10 November 2020 (2020-11-10) <br> entire document | 1-10 |
| A | CN 114601254 A (LI, Zhi) 10 June 2022 (2022-06-10) <br> entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 May 2024** | **19 July 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/082008** |

### C.    DOCUMENTS CONSIDERED TO BE RELEVANT

| Category* | Citation of document, with indication, where appropriate, of the relevant passages | Relevant to claim No. |
|---|---|---|
| A | CN 111345581 A (NANTONG JIUNENG INTELLIGENT EQUIPMENT CO. LTD.) 30 June 2020 (2020-06-30) entire document | 1-10 |
| A | CN 208708522 U (YOU, Qinghong) 09 April 2019 (2019-04-09) entire document | 1-10 |
| A | JP H06136978 A (UCHIDA ISAMU) 17 May 1994 (1994-05-17) entire document | 1-10 |
| A | KR 20120081052 A (JO GI HWAN) 18 July 2012 (2012-07-18) entire document | 1-10 |
| A | JP 2015134124 A (ICHIMURA KK) 27 July 2015 (2015-07-27) entire document | 1-10 |

Form PCT/ISA/210 (second sheet) (July 2022)

**INTERNATIONAL SEARCH REPORT**
Information on patent family members

International application No.

**PCT/CN2024/082008**

| Patent document cited in search report | | | Publication date (day/month/year) | Patent family member(s) | | | Publication date (day/month/year) |
|---|---|---|---|---|---|---|---|
| CN | 116195832 | A | 02 June 2023 | CN | 219479488 | U | 08 August 2023 |
| CN | 111109841 | A | 08 May 2020 | EP | 4026455 | A1 | 13 July 2022 |
| | | | | EP | 4026455 | A4 | 02 November 2022 |
| | | | | US | 2022378193 | A1 | 01 December 2022 |
| | | | | US | 11744359 | B2 | 05 September 2023 |
| | | | | WO | 2021139450 | A1 | 15 July 2021 |
| | | | | CN | 212165234 | U | 18 December 2020 |
| CN | 107125919 | A | 05 September 2017 | CN | 207626785 | U | 20 July 2018 |
| CN | 106714616 | A | 24 May 2017 | EP | 3179885 | A1 | 21 June 2017 |
| | | | | EP | 3179885 | B1 | 25 April 2018 |
| | | | | AU | 2015301938 | A1 | 30 March 2017 |
| | | | | JP | 2017527354 | A | 21 September 2017 |
| | | | | JP | 6449436 | B2 | 09 January 2019 |
| | | | | US | 2016037907 | A1 | 11 February 2016 |
| | | | | US | 9572422 | B2 | 21 February 2017 |
| | | | | WO | 2016025387 | A1 | 18 February 2016 |
| | | | | JP | 2017527354 | W | 21 September 2017 |
| CN | 211901518 | U | 10 November 2020 | None | | | |
| CN | 114601254 | A | 10 June 2022 | CN | 214711147 | U | 16 November 2021 |
| CN | 111345581 | A | 30 June 2020 | None | | | |
| CN | 208708522 | U | 09 April 2019 | None | | | |
| JP | H06136978 | A | 17 May 1994 | None | | | |
| KR | 20120081052 | A | 18 July 2012 | KR | 101376660 | B1 | 20 March 2014 |
| JP | 2015134124 | A | 27 July 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 204071049 U

- CN 213992819 U